# EUROPEAN PATENT APPLICATION

(11) **EP 1 610 557 A1**
(43) Date of publication of application: **28.12.2005**
(21) Application number: 05000569.3
(22) Date of filing: 13.01.2005
(51) Int. Cl.: H04N 7/24, G06F 17/30

(54) **System and method for embedding multimedia processing information in a multimedia bitstream**

(30) Priority: 21.06.2004 US 873097
(71) Applicant: CyberLink Corp., Shindian City, Taipei (TW)
(72) Inventor: Huang, Jau Hsiung, Shindian City, Taipei 231 (TW); Huang, Ho Chao, Shindian City, Taipei 231 (TW); Lee, Yu Chung, Yonghe City, Taipei County 234 (TW)
(74) Representative: Rehberg Hüppe + Partner

(57) **Abstract**

Systems and methods for embedding multimedia processing information in a multimedia bitstream to form a hybrid multimedia bitstream having data representing multimedia processing information as well data representing a multimedia signal. The embedded multimedia processing information may be extracted from the multimedia bitstream by an executable module to assist in processing the multimedia bitstream in subsequent steps.

## Description

### TECHNICAL FIELD

The present invention relates to systems and methods for processing multimedia and, more specifically, relates to systems and methods for embedding multimedia processing information in, and extracting multimedia processing information from, a multimedia bitstream.

### BACKGROUND OF THE INVENTION

The need to analyze, edit, and process digital multimedia content, for example, digital audio or digital video, has become a necessity for those who manipulate multimedia content. Processing multimedia content, at one time, was thought of as a task only performed by professional studios. However, advances in computing hardware and the technology used for editing audio and video has opened the door to non-professionals as well.

For example, a home movie may be recorded using a personal camcorder and transferred to a personal computer for processing, editing, or long-term storage. Digital camcorders, for example, record audio, video, and other information related to the home movie in digital form, such as on tape, computer memory, or a mass storage medium. The home movie may then be transferred to a personal computer using any number of interfaces, and then stored as a digital stream such as multimedia file in a number of common formats such as MPEG-1, MPEG-2, or DV, for example.

As a further example, musicians frequently record, edit, and mix audio in digital format, and therefore, commonly process audio bitstreams during the editing process. Similar to video bitstreams, audio bitstreams may include data streams such as the title, author, and copyright year in the bitstream itself. This audio may be stored as a digital stream such as multimedia file in a number of common formats such as MP3, WAV, or MPEG Audio, for example.

Due to algorithm complexity and the relatively large amounts of multimedia data that is typically processed, the task of analyzing and processing multimedia content can take a considerable amount of time, even on powerful computers.

Typically, multimedia bitstreams are reprocessed and analyzed without the consideration of prior processing or analysis. For example, during the process of editing a home movie, a user may request the editing software to automatically detect scene changes in the video. The editing software first analyzes the multimedia bitstream for scene change positions and values using any number of complex algorithms, such as motion detection, the detection of a difference in the audio properties, or the detection of a significant change in the color, brightness, or saturation of the video bitstream.

The analysis may, typically after a considerable amount of time, provide a value indicating the likelihood that a particular position in the multimedia bitstream is a scene change. Accordingly, the multimedia processing or editing software may be commanded to split the video in these positions.

In a subsequent analysis for the contrast or brightness level of the same multimedia bitstream, for example, the multimedia bitstream is completely reanalyzed, even though this information may already have been detected during the prior analysis. Likewise, if the scene change positions and values are lost, the video analyzing software completely reexamines the multimedia bitstream. Additionally, if the multimedia bitstream is passed to another user or analyzed using different software, as is commonly done during the editing process, the information is again lost. Thus, any analyzing of the multimedia bitstream already performed must be repeated. The repeated reanalyzing of the multimedia bitstream can be very time consuming and wasteful of computing and personnel resources.

### SUMMARY

An embodiment of the present invention may be described as a method for digital multimedia processing. The method may include providing a multimedia bitstream having multimedia content representing a multimedia signal, such as an audio signal or a video signal, and embedding multimedia processing information useful for processing the multimedia content within the multimedia bitstream.

Another embodiment of the present invention may be described as a computer readable medium having a computer program for digital multimedia processing. The computer readable medium may include a code segment for providing a multimedia bitstream having multimedia content representing an multimedia signal. Additionally, another code segment may be provided for embedding multimedia processing information useful for processing the multimedia content within the multimedia bitstream.

Another embodiment of the present invention may be described as a system for processing digital multimedia. The system may include an executable module for embedding multimedia processing information within a multimedia bitstream, wherein the multimedia processing information is useful for processing multimedia content.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF THE DRAWINGS

The components in the drawings are not necessarily to scale relative to each other. Like reference numerals designate corresponding parts throughout the several views.
FIG. 1 depicts an exemplary system for embedding multimedia information in a multimedia bitstream.
FIG. 2 depicts a block diagram of the exemplary computer system of FIG. 1, which includes executable modules for embedding multimedia processing information in a multimedia bitstream.
FIG. 3 depicts a block diagram of an embodiment of a system for determining multimedia processing information to be embedded within a multimedia bitstream.
FIG. 4 depicts an exemplary system for embedding multimedia processing information within multimedia data streams to form a hybrid multimedia stream.
FIG. 5 depicts a block diagram of an exemplary embodiment of a system for extracting multimedia processing information from a multimedia bitstream, and for embedding multimedia processing information in a multimedia bitstream.
FIG. 6 depicts an exemplary method for embedding multimedia processing information in a multimedia bitstream.
FIG. 7 depicts yet another exemplary method for embedding multimedia processing information in a multimedia bitstream.

### DETAILED DESCRIPTION

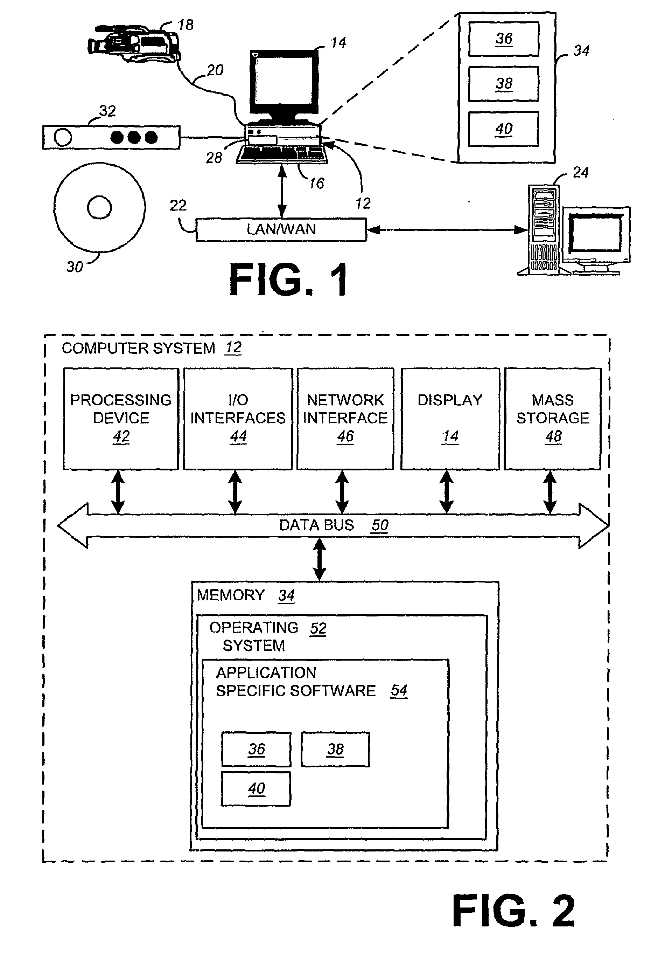

In accordance with certain aspects of a multimedia processing system, FIG. 1 depicts a system for embedding multimedia processing information in a multimedia bitstream including a computer system 12 having a display 14 and user input device 16, which may be a keyboard or a mouse, for example.

A video camera 18 may be coupled to computer system 12 via an electrical cable 20 or a wireless connection. Video camera 18 may, for example, be a digital camcorder which records multimedia content in a variety of digital formats. In this embodiment, electrical cable 20 may be any number of common computer interface cables, such as, but not limited to IEEE-1394 High Performance Serial Bus (Firewire), Universal Serial Bus (USB), a serial connection, or a parallel connection. In this embodiment, a digital multimedia stream may be transferred from video camera 18 to computer system 12 over electrical cable 20.

Computer system 12 may also form a node on a network 22 such as, but not limited to a LAN or a WAN. In this configuration, multimedia bitstreams may be delivered from a remote server 24 over network 22 to computer system 12. The connection between the remote server 24 and computer system 12 may be any number of standard networking interfaces such as a CAT-5, Firewire, or wireless connection. Computer system 12 may also include optical drive 28 to receive and read optical disk 30, which may have multimedia bitstreams encoded thereon.

In some embodiments, a multimedia bitstream may be downloaded to the computer using multimedia input device 32 which may be a break-out box, or could be integrated onto an expansion card, either of which are electrically connected to computer system 12.

Multimedia input device 32 may include a variety of standard digital or analog input connections for receiving multimedia signals such as, but not limited to, RCA jacks, a microphone jack, Sony/Philips Digital Interface (S/PDIF) connections, optical connections, coaxial cable, and S-video connections. Multimedia input device 32 may include an analog-to-digital converter for converting analog multimedia to digital multimedia streams. In an embodiment in which multimedia input device 32 is a break-out box external to computer system 12, the box is electrically connected in an number of ways, for example, but not limited to, Firewire, USB, a serial connection, or a parallel connection.

Computer system 12 includes a memory 34 which may be used to store a number of executable modules therein. In this embodiment, a multimedia acquisition module 36, multimedia analyzing module 38, and multimedia processing module 40 is stored therein. Memory 34 may include a number of other modules which, for example, could be sub-modules of multimedia acquisition module 36, multimedia analyzing module 38, and multimedia processing module 40.

Multimedia acquisition module 36 may acquire a multimedia bitstream in a number of ways, depending on the source. For example, multimedia acquisition module 36 may coordinate the transfer of a multimedia bitstream from video camera 18, optical disc 28, remote server 24, or a mass storage device 48 (FIG. 2) to computer system 12. Multimedia acquisition module 36 also provides the multimedia bitstream to executable modules such as multimedia analyzing module 38, and multimedia processing module 40.

Multimedia analyzing module 38 may be used for analyzing audio and video content within a multimedia bitstream. For example, multimedia analyzing module 38 may be used for detecting scene change positions and values, detecting whether video is interlaced, detecting the level of color saturation in the source video, detecting the contrast or brightness level of the source video, or detecting various other characteristics of video or audio within a multimedia bitstream. Multimedia analyzing module 38 may be configured to embed the results obtained from analyzing the audio and/or video into the multimedia bitstream.

Multimedia processing module 40 may perform a number of processing steps to a multimedia bitstream. For example, multimedia processing module 40 may normalize the volume of an audio bitstream, change the contrast or brightness level of a video bitstream, change the color saturation of a video bitstream, speed up or slow down the playback of the bitstream, or other video processing tasks such as enhancing or blurring the video content. Thus, multimedia processing module 40 may change video and/or audio content in the bitstream, and may also be configured to embed the results obtained from analyzing and processing the video and/or audio content.

Note that in some embodiments, multimedia acquisition module 36, multimedia analyzing module 38, and the multimedia processing module 40 may be combined into a single module that performs any combination of the tasks performed by each of the modules separately. Thus, any modules or submodules described herein are not limited to existing as separate modules. In reality, all modules may operate apart from one another, or could easily be combined as one module.

In some embodiments, a user may interact and control the operation of multimedia acquisition module 36, multimedia analyzing module 38, and multimedia processing module 40 through user input device 16 and a graphical user interface within display 14.

Each of the multimedia acquisition module 36, multimedia analyzing module 38, and multimedia processing module 40, and any sub-modules, may comprise an ordered listing of executable instructions for implementing logical functions. When multimedia acquisition module 36, multimedia analyzing module 38, and multimedia processing module 40, and any sub-modules are implemented in software, it should be noted that the system can be stored on any computer-readable medium for use by or in connection with any computer-related system or method. In the context of this document, a computer-readable medium is an electronic, magnetic, optical, or other physical device or apparatus that can contain or store a computer program for use by or in connection with a computer-related system or method. Multimedia acquisition module 36, multimedia analyzing module 38, and multimedia processing module 40, and any sub-modules can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In the context of this document, a "computer-readable medium" can be anything that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

FIG. 2 is a block diagram illustrating an exemplary embodiment of computer system 12 on which multimedia acquisition module 36, multimedia analyzing module 38, and multimedia processing module 40 may be executed. Generally speaking, the computer system 12 can comprise any one of a wide variety of wired and/or wireless computing devices, such as a desktop computer, portable computer, dedicated server computer, multiprocessor computing device, cellular telephone, personal digital assistant (PDA), handheld or pen based computer, embedded appliance and so forth. Irrespective of its specific arrangement, computer system 12 can, for instance, comprise memory 34, a processing device 42, a number of input/output interfaces 44, a network interface device 46, and mass storage 48, wherein each of these devices are connected across a data bus 50.

Processing device 42 can include any custom made or commercially available processor, a central processing unit (CPU) or an auxiliary processor among several processors associated with the computer system 12, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 34 can include any one of a combination of volatile memory elements (*e.g.*, random-access memory (RAM, such as DRAM, and SRAM, *etc.))* and nonvolatile memory elements (*e.g*., ROM, hard drive, tape, CDROM, *etc.).* The memory 34 typically comprises a native operating system 52, one or more native applications, emulation systems, or emulated applications for any of a variety of operating systems and/or emulated hardware platforms, emulated operating systems, *etc.* For example, the applications may include application specific software 54, which may include any of the multimedia acquisition module 36, multimedia analyzing module 38, and multimedia processing module 40. One of ordinary skill in the art will appreciate that memory 34 can, and typically will, comprise other components which have been omitted for purposes of brevity.

Input/output interfaces 44 provide any number of interfaces for the input and output of data. For example, where the computer system 12 comprises a personal computer, these components may interface with user input device 16, which may be a keyboard or a mouse. Where the computer system 12 comprises a handheld device (*e.g*., PDA, mobile telephone), these components may interface with function keys or buttons, a touch sensitive screen, a stylist, *etc.* Display 14 can comprise a computer monitor or a plasma screen for a PC or a liquid crystal display (LCD) on a hand held device, for example.

With further reference to FIG. 2, network interface device 46 comprises various components used to transmit and/or receive data over network 22. By way of example, the network interface device 46 may include a device that can communicate with both inputs and outputs, for instance, a modulator/demodulator (*e.g*., a modem), wireless (*e.g*., radio frequency (RF)) transceiver, a telephonic interface, a bridge, a router, network card, *etc*.)

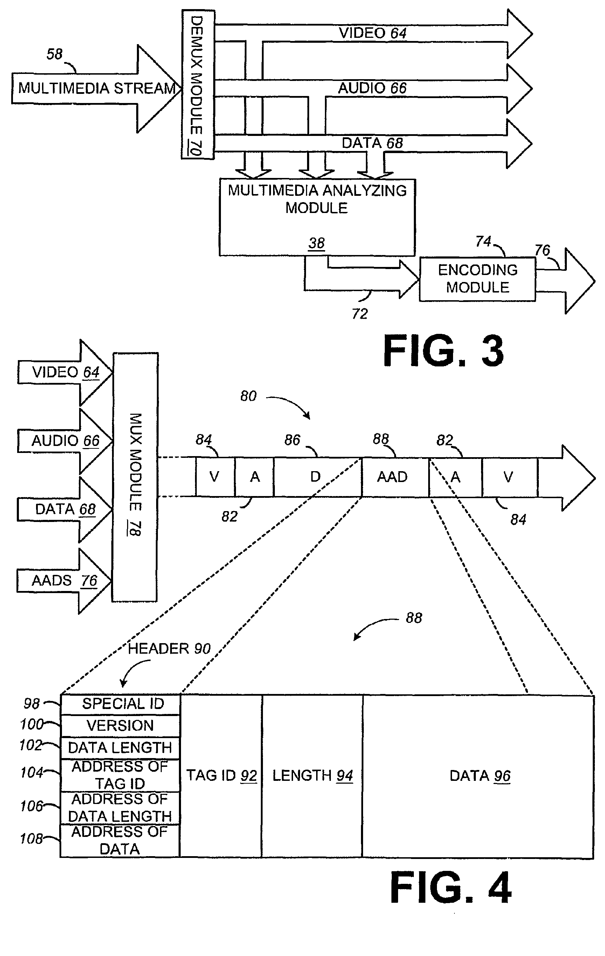

Looking now to FIG. 3, an embodiment of a system for determining multimedia information to be embedded within a multimedia system is described. Multimedia analyzing module 38, which may be integrated within other modules such as multimedia processing module 40, accepts a multimedia stream 58 as input and analyzes the multimedia stream 58 for properties related to the multimedia stream which may be embedded within the multimedia stream. These properties, or characteristics, of the multimedia content will be set forth in more detail below. Multimedia analyzing module 38 provides data output representing the results obtained from analyzing the audio and/or video.

A multimedia stream may be, for example, any type of file, data stream, or digital broadcast representing any combination of audio, video, data, text, pictures, *etc*. For example, multimedia streams may take the format of an MPEG-1 bitstream, an MPEG-2 bitstream, an MPEG-4 bitstream, an H.264 bitstream, a 3GPP bitstream, a 3GPP-2 bitstream, Standard-Definition Video (SD-Video) bitstream, a High-Definition Video (HD-Video) bitstream, a Digital Versatile Disc (DVD) multimedia bitstream, a Video Compact Disc (VCD) multimedia bitstream, a High-Definition Digital Versatile Disc (HD-DVD) multimedia bitstream, a Digital Television Video / High-definition Digital Television (DTV/HDTV) multimedia bitstream, an AVI bitstream, a WAV bitstream, a digital video (DV) bitstream, a QuickTime (QT) file, a Compact Disc Audio (CDA) bitstream, an MPEG Audio Layer III (MP3) bitstream, an MPEG Audio Layer II (MP2) bitstream, Windows Media Audio (WMA) bitstream, a Windows Media Video (WMV) bitstream, an Advanced System Format (ASF) bitstream, or any number of other popular digital multimedia formats. The above exemplary data streams are merely examples, and it is intended that the system cover any type of multimedia bitstream in its broadest sense.

The exemplary embodiment of FIG. 3 depicts a multimedia stream 58 in the MPEG-2 format, for example. The MPEG standard, known as ISO-13818-1 is capable of multiplexing multiple streams of multimedia content into a single stream. For example, each of a video stream 64, audio stream 66, and private data stream 68, coexist within multimedia stream 58.

Video stream 64, audio stream 66 and private data stream 68 are known as "elementary streams." The MPEG standard allows for the combination of multiple elementary video, audio, or data streams into the same multimedia stream 58. Thus, for example, multimedia stream 58 may include an audio stream for the English language and a second audio stream for the Spanish language. Likewise, multiple video streams may be used. For example, a first video stream could represent video from one camera angle and a second video stream represents video from another angle. Private data stream 68, sometimes known simply as a data stream, is not limited to any single type of data. Data stream 68 may be used, for example, to provide an identification of multimedia stream 58 or may contain data to be decoded by a closed captioning device.

Typically, multimedia analyzing module 38 considers each of the audio, video, and data streams separately. Therefore, a demultiplexing system, herein DEMUX 70, is provided to demultiplex, or separate, the elementary streams from multimedia stream 58. Here, multimedia stream 58 is passed into DEMUX 70 and video stream 64, audio stream 66, and private data stream 68 are provided as outputs to multimedia analyzing module 38.

Multimedia analyzing module 38 may analyze the video, audio, and/or data bitstreams to determine properties related to the audio or video within the multimedia stream for a number of purposes. For example, multimedia analyzing module 38 may analyze the multimedia stream 58 to determine information representing a property of the multimedia stream 58 that is useful for multimedia processing.

Multimedia processing may include, but is not limited to, removing noise from audio or video, compressing audio or video, blurring video, color correction/calibration of video, color temperature adjustment of video, chroma upsampling of video, video rotation, watermarking, judder removal, smart cropping, smart scaling or stretching, skin tone correction, video deinterlacing, audio virtual surround, audio voice extraction, video object removal, or other special effects or audio/video enhancements.

Therefore, information representing a property of the multimedia stream 58 that is useful for multimedia processing, herein multimedia processing information, may include, but is not limited to, determining an amount of motion in the data representing video content, determining the probability of a scene change in a segment of video and the corresponding location in the stream of multimedia data, determining if video is interlaced, determining if video has been previously altered, determining if video includes a video watermark, determining if video has been enhanced, determining if video has been blurred, determining the color saturation of video, determining the contrast level of video, determining the brightness level of video, determining the level of noise in the audio, determining if audio is normalized, determining the level of hiss in audio, determining positions of video in which faces or eyes are located, determining if any human voices are in an audio stream, determining noise level of in the audio, determining the level of blockiness in the video, determining frame complexity in the video, detecting skin colors in the video, detecting animation in the video, determining object segmentation, detecting viewer focus, and detecting frame orientation.

In addition to analyzing one, or both of, the audio and video streams, multimedia analyzing module 38 may read private data stream 68 to determine if multimedia processing information has been embedded therein. For example, if analyzing module 38 is tasked with determining particular characteristics of a video or audio stream, and information containing these characteristics have already been embedded in private data stream 68, analyzing module may be configured to skip that task and merely pass on the information already embedded within data stream 68. In this respect, time is not wasted reanalyzing that which has been previously analyzed.

Multimedia analyzing module 38 may also include error checking features, such as a checksum or other identifying information, to determine if the information embedded within private data stream 68 corresponds to multimedia processing information.

Once multimedia analyzing module 38 has analyzed multimedia stream 58 for properties useful for multimedia processing, multimedia analyzing module 38 may provide analyzed attribute data 72 as its output. Analyzed attribute data 72 contains data representing the multimedia processing information, which was obtained from analyzing the audio and video bitstreams. Analyzed attribute data 72 may be represented in a predetermined format, which may be used directly by other modules such as processing module 40.

As depicted in FIG. 3, however, analyzed attribute data 72 may be also passed through an encoding module 74 to convert the format of analyzed attribute data 72 into a bitstream conforming to a variety of standard formats. In other embodiments, encoding module 74 may be integrated within multimedia analyzing module 38, rather than operating as a separate, stand-alone module.

In many cases, it is desirable for encoding module 74 to transform analyzed attribute data 72 into a formatted data stream conforming to that required by a particular multimedia standard (*e.g*. MPEG-2, AVI, *etc*.). In the present embodiment, the predetermined format of analyzed attribute data 72 is not one recognized as conforming to an MPEG-2 bitstream. Thus, encoding module 74 is used to convert the analyzed attribute data 72 into an MPEG compliant elementary stream, such as formatted analyzed attribute data stream 76 which may be a packetized elementary stream consisting of packetized elementary stream (PES) packets. Accordingly, the multimedia processing data represented by analyzed attribute data 72 is formatted into analyzed attribute data stream 76.

FIG. 4 depicts an exemplary system for combining, or multiplexing, the analyzed attribute data stream 76 into a hybrid multimedia stream. A multiplexing module, herein MUX 78, accepts inputs of video stream 64, audio stream 66, private data stream 68 as well as the formatted analyzed attribute data stream 76 as output by encoding module 74 in FIG. 3. MUX 78 operates to multiplex, encode, or otherwise combine streams 64, 66, 68, and 70 into a single hybrid multimedia stream 80.

Hybrid multimedia stream 80 may then be stored as a file on any type of mass storage system such as a hard drive, floppy drive, optical drive, optical media, tape, *etc*. Alternatively, the file may be transmitted across a network to a remote host having a module configured to process hybrid multimedia stream 80. For example, multimedia processing module 40, located within computer system 12, may be enabled to read hybrid multimedia stream 80 from the attached mass storage 48.

While the embodiment of FIG. 4 depicts data streams 68 and 76 as separate data streams, in some embodiments, MUX 78, or other circuitry or software upstream of MUX 78, may first combine private data stream 68 and formatted analyzed attribute data stream 76 into a single data stream. Therefore, for example, title information data, closed captioning data, and analyzed attribute data may coexist within the same elementary stream.

As defined herein, hybrid multimedia stream 80 includes both data representing multimedia processing information as well as data representing a multimedia signal. A multimedia signal includes a video signal and/or an audio signal. The hybrid multimedia stream 80 may also include other types of elementary data streams such as, for example, data stream 68. Thus, while FIG. 4 depicts all four of video stream 64, audio stream 66, data stream 68, and formatted analyzed attribute data stream 76, other embodiments of a hybrid data stream 80 may only contain formatted analyzed attribute data stream 76 and any one of video stream 64 and/or audio stream 66, for example.

Exemplary hybrid multimedia stream 80 is comprised of a plurality of alternating audio data blocks 82, video data blocks 84, private data blocks 86, and analyzed attribute data blocks 88. Audio data blocks 82 represent data from audio stream 66, and video data blocks 84 represent data from video stream 64. Likewise, private data block 86 represents data incorporated from private data stream 68 while analyzed attribute data block 88 represents data originating from formatted analyzed attribute data stream 76.

Audio data blocks 82, video data blocks 84, private data blocks 86, and analyzed attribute data blocks 88 may be encoded in any particular sequence, and each block may vary in size, and is only limited by the particular standard employed (*e.g*. MPEG-2, MPEG-4, *etc*.). For example, private data blocks 86 or analyzed attribute data blocks 88 may be placed at the beginning, at the end, or intermittently throughout the hybrid multimedia stream 80.

FIG. 4 also depicts an exemplary exploded view of an exemplary analyzed attribute data block 88 which may be embedded within the hybrid multimedia stream 80. Analyzed attribute data block 88 may include fields, such as, but not limited to, a Header Field 90, a Tag ID field 92, a Length Field 94, and a Data Field 96. Analyzed attribute data block 88 may be further encapsulated within a transport packet of a particular multimedia format. For example, analyzed attribute data block 88 may be encapsulated within a packetized elementary stream (PES) packet, as defined by the MPEG-2 standard.

Header field 90 may include subfields useful for decoding and extracting the information from analyzed attribute data block 88. Subfields may include, but are not limited to, the Special ID Subfield 98, Version Subfield 100, Length of the Data Subfield 102, Address of Tag ID Subfield 104, Address of Length Subfield 106, and Address of Data Subfield 108. The information in Header Field 90 may vary by application and the fields described herein are merely examples of one possible format.

The Special ID Subfield 98 may refer to identifying information that a decoder may use to identify analyzed attribute data block 88 as a block containing analyzed attribute data, rather than other types of data which may be stored within a particular data stream, for example, title information. Version Subfield 100 may include information which a decoder could use to determine the format version of the data encapsulated in analyzed attribute data block 88. The Length of the Data Subfield 102 indicates the total length of Data Field 96. For example, the Length of Data Subfield 102 may indicate that Data Field 96 has a total length of 1024 bytes. The Address of Tag ID Subfield 104 indicates the position in data block 88 where the Tag ID field 92 is located. The Address of Data Length Subfield 106 indicates the position in the data block 88 where the Length Field 94 is located. The Address of Data Subfield 108 indicates the position in the data block where the Data Field 96 is located. For example, each of the Address of Tag ID Subfield 104, Address of Data Length Subfield 106, and the Address of Data Subfield 108 may contain a hexadecimal number referencing a specific memory location, or an offset from a predetermined memory location.

Tag ID Field 92 may identify an identifying tag for a number of multimedia processing properties. For example, Tag ID Field 92 may contain data identifying a "scene change" as equivalent to "tag 1," "motion" as equivalent to "tag 2," and "contrast" as equivalent to "tag 3." The multimedia processing properties and their identifying tags are not limited to those described above and will vary and may be arranged in any particular order. The multimedia processing properties and their identifying tags may, for example, be any series of numbers or letters that can be decoded to identify the multimedia processing information in Data Field 96.

Data Field 96 may contain the multimedia processing information and an associated tag for each multimedia processing property defined in the "Tag ID" field. For example, in the exemplary embodiment, multimedia processing information corresponding to "motion" may be found by searching sequentially, or otherwise, for the associated "tag 2" within the Data Field 96.

In one embodiment, to assist in searching for a particular tag, and its associated data within Data Field 96, analyzed attribute data block 88 may also include a Length of Data Field 94 which contains the length (*e.g*. the number of bits) of each individual multimedia processing information associated with a particular tag within Data Field 96.

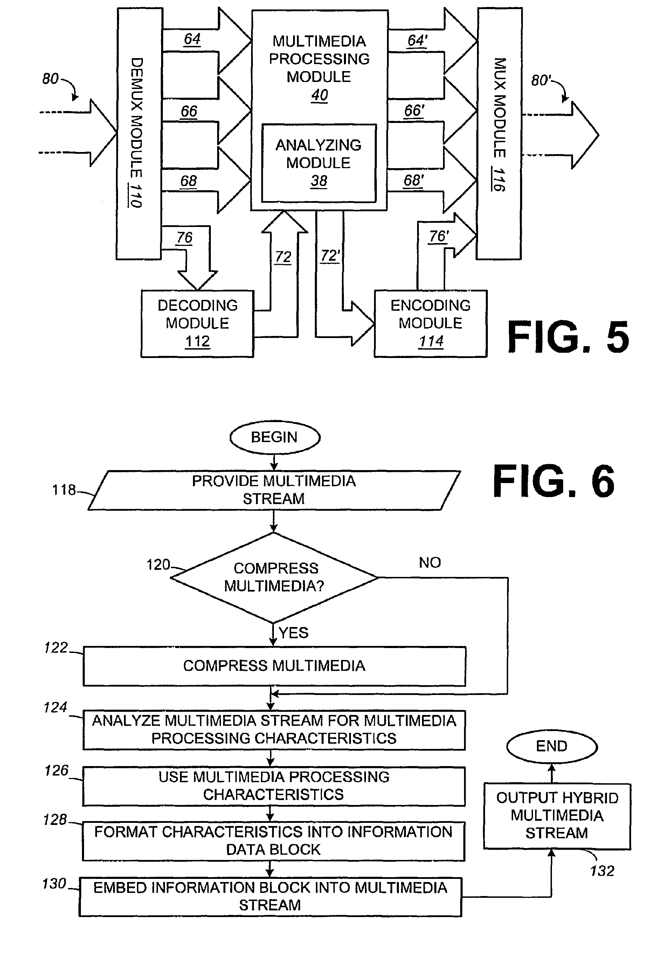

Looking now to FIG. 5, another embodiment of a system for embedding multimedia processing information in a multimedia bitstream is depicted. In general, the illustrated embodiment includes a demultiplexer, here in DEMUX 110 for demultimplexing, or separating, multimedia streams into elementary streams, a multimedia processing module 40 for processing multimedia content, a multimedia analyzing module 38 for analyzing multimedia content, a decoding module 112 for converting data from a particular multimedia standard (*e.g*. MPEG-2, etc.) into a format recognizable to multimedia processing module 40, an encoding module 114 for converting data into a bitstream compliant to a particular multimedia standard, and a MUX 116 for multiplexing, or combining, each of the video stream 64', audio stream 66', private data stream 68' as well as formatted analyzed attribute data stream 76' into hybrid multimedia stream 80'.

While FIG. 5 depicts DEMUX 110, MUX 116, decoding module 112, and encoding module 114 as separate modules, it should be understood that each of these modules may be incorporated within multimedia processing module 38. Additionally, as in the embodiments of FIGs. 3 and 4, multimedia stream 80 may be in a variety of multimedia formats and may undergo a variety of pre-processing steps which are not shown. For example, the multimedia stream may be captured in a first format and converted into another format, which may also involve compression of the video and/or audio data.

According to the embodiment of FIG. 5, a demultiplexer, DEMUX 110, separates hybrid multimedia stream 80 into individual elementary streams - video stream 64, audio stream 66, private data stream 68, and formatted analyzed attribute data stream 76. Analyzed attribute data stream 76, which may include a plurality of analyzed attribute data blocks 88, is passed through decoding module 112. Decoding module 112 is configured to decode the data stored within the analyzed attribute data blocks 88, format the data, and pass the data to multimedia processing module 40 which may use any of the multimedia processing information within the data to process the audio or video within video stream 64 and/or audio stream 66.

Multimedia processing module 40 may, for example, be enabled to remove noise from audio or video, compress audio or video, enhance audio or video, blur video, or add other special effects to the audio or video. To process the audio or video, multimedia processing module 40 may need information representing a property of the multimedia stream that is useful for multimedia processing. For example, if multimedia processing module 40 is tasked to compress the video stream, motion information about the video stream may be useful.

Accordingly, multimedia processing module 40 may further include the multimedia analyzing module 38 substantially as described in reference to FIG. 3. However, in this embodiment, multimedia analyzing module 38 may be a sub-module of multimedia processing module 40.

By using multimedia information already embedded within hybrid stream 80, the multimedia processing module 40 may not require reanalyzing the audio and/or video content, or may be required to do much less, saving the user a considerable amount of time.

In the embodiment of FIG. 5, multimedia stream 80 is in the same format of multimedia stream 80 as output from MUX 78 from FIG. 4. Thus, exemplary multimedia stream 80 includes a plurality of alternating audio data blocks 82, video data blocks 84, private data blocks 86, as well as analyzed attribute data blocks 88.

In practice, an executable module is used to decode analyzed attribute data blocks 88 within formatted analyzed attribute data stream 76. For example, decoding module 112 may read the Special ID Field 98 in Header Field 90 to determine whether the particular data block is, in fact, one containing multimedia processing information. If so, decoding module 112 looks to the Version Subfield 100 to determine whether the version of the analyzed attribute data block 88 is known, and therefore able to decode the multimedia data stored within Data Field 96. If decoding module 112 determines that the multimedia data can be decoded, decoding module 112 inspects the contents of Address of Tag ID Subfield 104, Address of Data Length 106, and the Address of Data Subfield 108 to determine the starting address of the Tag ID Field 92, Data Length Field 94 and Data Field 96, respectively.

Decoding module 112 may then jump to the starting address of the Tag ID Field 92, and parse each of the tags and their associated values within Tag ID Field 92, thereby determining the associated tags for the multimedia processing information. In some instances, decoding module 112 may only be interested in a subset of the total information stored in Data Field 96, such as the "motion" and "contrast" information. In this example, the decoding module 112 may only parse the Tag ID Field 92 until the module determines that "tag 2" and "tag 3" correspond to the "motion" and "contrast" information, respectively.

Decoding module 112 may then jump to the starting address of the Length of Data Field 94. Decoding module 112 may read the contents of the Length of Data Field 94 to determine the length of the multimedia processing information associated with each tag for which it seeks information. In this example, decoding module 112 determines the length of the multimedia processing information associated with "tag 2" and "tag 3." For example, Length of Data Field 94 may contain data indicating that the data associated with "tag 2" has a length of 32 bytes, and the data associated with "tag 3" has a length of 64 bytes.

Decoding module 112 may then jump to the start of Data Field 96 and parse through the data contained therein until it finds either "tag 2" or "tag3," which may indicate the start of the associated multimedia processing information.

Beginning with the tag and reading to an offset address determined from the length of multimedia processing information associated with the tag, decoding module 112 may read and temporarily store the associated multimedia processing information in memory. The executable module then continues parsing the Data Field 96 until finding the remainder of the tags by repeating the step of reading the multimedia processing information associated with each tag.

The resulting decoded analyzed attribute data 72 is output from decoder 112 in a predetermined format. The multimedia processing information in the analyzed attribute data 72 may then be passed into multimedia processing module 40 for use in processing the audio and video bitstreams. In some cases, the decoded multimedia processing information may contain none of, or only a subset of, the multimedia processing information needed for the multimedia processing task. Thus, analyzing module 38 may provide further analysis of the video and audio content to provide the remaining information needed by multimedia processing module 40.

If analyzing module 38 analyzes the multimedia streams for any new information useful for multimedia processing, that information may be saved and encoded back into multimedia stream 80 in a manner similar to that described in relation to FIGs. 3 and 4. That is, the nonencoded data 72' is encoded into analyzed attribute data stream 76' using encoding module 114. MUX 116 may then multiplex analyzed attribute data stream 76', along with video stream 64', audio stream 66', and private data stream 68' into hybrid multimedia stream 80'. Video stream 64 and/or audio stream 68 may have been altered by multimedia processing module 40, and because information pertaining to these alterations may also be useful for subsequent multimedia analyzing or processing, the information may be stored within analyzed attribute data stream 76' and integrated into the hybrid stream 80'. The hybrid stream 80' may then be decoded and used by any subsequent executable module configured to extract the multimedia processing information from multimedia stream 80'.

FIG. 6 represents an exemplary flow diagram depicting a method for embedding multimedia processing information into a multimedia video stream. At step 118, a raw multimedia file is provided, for example, by a multimedia acquisition module.

Because multimedia files, such as DV files, may be excessively large, it is sometimes beneficial to compress the multimedia bitstream. Thus, at decision block 120, a determination is made as to whether a compression of the multimedia information is needed. If compression is needed (the YES condition), the multimedia information is compressed, and possibly converted to a new format, using techniques well known to those skilled in the art in step 122. For example, a DV file may be compressed and converted to MPEG-2, or a bitstream already in MPEG-2 format may be further compressed.

The compression step 122 may also perform multimedia analysis as described in relation to the embodiments of a multimedia analyzing module described above. Specifically, to perform compression of audio or video streams, some analysis of the multimedia stream may be performed to determine multimedia processing information used to compress the audio or video content. For example, video compression analysis may include performing motion estimation. In addition, analysis other than that needed only for the multimedia compression may be performed during compression step 122. The resulting multimedia attributes from the analysis performed in compression step 122 may be embedded into the compressed multimedia stream.

For example, looking back to FIG. 5, multimedia processing module 40 may be configured to perform the compression step 122. Therefore, analyzing module 38 may be configured to supply multimedia processing module 40 with multimedia attribute information useful for compression, or any other future video processing algorithms. This information may then be embedded into the multimedia stream for use in subsequent multimedia processing or analysis.

Continuing with the flow diagram of FIG. 6, if compression is not performed (the NO condition), or after a bitstream has already been compressed in step 122, the multimedia content may be analyzed in step 124 for any properties of the multimedia content useful for multimedia processing. At step 126, these properties may be used for processing a multimedia bitstream by a multimedia processing module, for example. At step 128, the multimedia processing properties may be formatted into at least one data block. At step 130, the data representing the multimedia processing properties are embedded into the multimedia stream, for example, by multiplexing them with video, audio, and/or data. This stream of data is output in step 132 as a hybrid data stream containing both multimedia processing data and multimedia content, such as video and/or audio data.

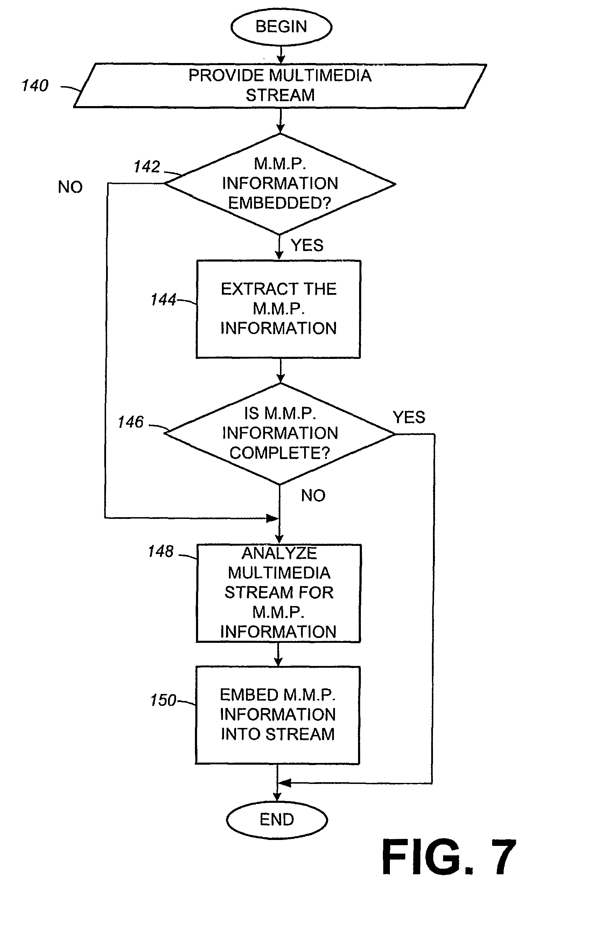

FIG. 7 depicts an exemplary flow diagram representing how a system employing multimedia processing module 40, or other executable modules, might use a hybrid multimedia stream having multimedia processing information embedded therein. At step 140, a multimedia stream is provided which may, or may not, be a hybrid multimedia stream containing multimedia processing information. Accordingly, at decision block 142, a determination is made as to whether any multimedia processing information is already embedded within the provided multimedia stream, which may involve decompressing, decoding, and/or demultiplexing the multimedia stream.

On the condition that at least some multimedia processing information is embedded in the multimedia stream (the YES condition of decision block 142), the multimedia processing information is extracted in step 144 and a determination is made at decision block 146 whether the embedded multimedia processing information is all the information that is needed for the multimedia processing module. This may be accomplished by analyzing the header information of the multimedia data blocks within the hybrid multimedia stream, or by analyzing the multimedia processing information itself.

If all the information that is needed for the multimedia processing module is embedded within the data stream (the YES condition of decision block 146), then the multimedia processing module may then access the multimedia processing information and use it as needed.

However, if the necessary multimedia processing information for the executable module is not embedded in the hybrid stream (the NO condition of block 146), the multimedia stream may be analyzed in step 148 to determine the additional multimedia processing information. The multimedia processing module may now be configured to use both the multimedia processing information extracted from the hybrid stream and the information discovered from analyzing the multimedia stream in step 148 to process the audio and/or video content. Both the information extracted from the hybrid stream and the information discovered from analyzing the multimedia stream may be embedded into the hybrid multimedia stream for subsequent use.

In contrast to situations in which there is no useful multimedia processing information embedded in the multimedia stream, only the missing multimedia processing characteristics may need to be determined in step 148. Therefore, step 148, which analyzes the multimedia content for its multimedia processing characteristics, is potentially less complicated and time consuming than if a full analysis, including all previously performed analysis, of the multimedia stream is performed.

If decision block 142 indicates that no multimedia processing is embedded (the NO condition), the multimedia processing module proceeds directly to analyzing the multimedia bitstream for the required multimedia processing information. The multimedia processing module may then use this information for processing the audio and/or video content. At step 150, the multimedia processing information, including information related to how the audio and/or video content was processed, may be embedded into the multimedia bitstream, if desired.

Once the multimedia processing information is embedded within the multimedia stream, the information may be extracted and used by any executable module, such as a multimedia processing module or multimedia editing module, configured to decode the multimedia data stream.

While embodiments have been described which embed the multimedia processing information into the multimedia bitstream by multiplexing a separate, user-defined data stream with multimedia bitstreams, some embodiments may embed the multimedia processing information in other ways. The format of the hybrid stream, or the process used to embed the multimedia processing information to create the hybrid stream, is not limited to any one embodiment.

For example, in some embodiments, multimedia processing information may be directly embedded in the same bitstream as the video and/or audio information. For example, some multimedia formats, such as formats following the MPEG standard, incorporate user defined data, also known as user data, within the video and/or audio bitstreams. User data may contain any binary data and is not necessarily associated with the video or audio information. Accordingly, this user data may, at least in part, correspond to multimedia processing information. This user information, corresponding to multimedia processing information, may be embedded into the bitstream as defined by the particular multimedia format. Similarly, the multimedia processing information may be extracted and used for subsequent multimedia processing or analyzing.

Additionally, in some embodiments, multimedia processing information may be embedded within multimedia streams that do not specifically allow for embedding user defined data within the multimedia stream. For example, it is possible to add a pattern of bits to a multimedia bitstream without altering the perceivable audio and/or video content. These bits may contain any binary data and are not necessarily associated with the video or audio information. For example, these techniques are used when embedding digital watermarks to identify copyright information in multimedia bitstreams. Accordingly, similar techniques may be used to embed multimedia processing data within these multimedia streams. Just as digital watermarks, for example, can be detected within a bitstream, similar techniques may be used to extract multimedia processing data from the multimedia stream for use in multimedia processing.

Accordingly, the above embodiments are merely examples of the many possible ways to embed multimedia processing information within a multimedia bitstream. Similarly, the above embodiments include mere examples of how to extract and use multimedia processing information embedded within a hybrid bitstream. Additionally, it should be emphasized that many variations and modifications may be made to the above-described embodiments. All such modifications and variations are intended to be included herein within the scope of this disclosure and protected by the following claims.

## Claims

1. A method for digital multimedia processing, comprising the steps of :
providing a multimedia bitstream having multimedia content representing a multimedia signal ; and
embedding multimedia processing information useful for processing the multimedia content within the multimedia bitstream.

2. The method of claim 1, further including the steps of :
determining at least one property of the multimedia signal useful for processing the multimedia content ; and
formatting the at least one property into at least one information data block;
wherein the step of embedding multimedia processing information further includes embedding the at least one information data block into a plurality of multimedia data blocks to produce a hybrid multimedia data stream.

3. The method of claim 2, wherein the multimedia signal includes a video signal, and
wherein the step of determining at least one property of the multimedia signal useful for processing the multimedia content comprises at least one of the following :
determining an amount of motion in at least one segment of the video signal ;
determining a probability of a scene change in at least one segment of the video signal, and determining a corresponding location of the scene change in the multimedia bitstream ;
determining if the video signal is interlaced ;
determining if the video signal has been altered ;
determining if the video signal includes a video watermark ;
determining if the video signal has been enhanced ;
determining if the video signal has been blurred ;
determining the color saturation of the video signal ;
determining the contrast level of video signal ;
determining the brightness level of video signal ;
determining positions of video in which faces or eyes are located ;
determining the level of blockiness in the video ;
determining frame complexity in the video ;
detecting skin colors in the video ;
detecting animation in the video ; and
detecting frame orientation in the video.

4. The method of one of claims 1 to 3, wherein the step of embedding multimedia processing information comprises multiplexing a bitstream representing the multimedia signal with the multimedia processing information useful for processing the multimedia content.

5. The method of one of claims 1 to 4, further including :
extracting the multimedia processing information from the multimedia bitstream ; and
processing the multimedia bitstream based on the extracted multimedia processing information.

6. The method of one of claims 1 to 3, wherein the step of embedding multimedia processing information useful for processing the multimedia content within the multimedia bitstream includes any one of the following :
embedding bits representing multimedia processing information directly into the multimedia bitstream ; or
embedding a pattern of bits representing multimedia processing information into the multimedia bitstream without altering the perceivable multimedia content.

7. The method of one of claims 1 to 3, wherein the step of embedding multimedia processing information useful for processing the multimedia content within the multimedia bitstream includes any one of the following :
embedding the multimedia processing information at the end of the multimedia bitstream;
embedding the multimedia processing information at the beginning of the multimedia bitstream ; or
embedding the multimedia processing information between two data blocks in the multimedia bitstream.

8. The method of one of claims 1 to 7, wherein the multimedia bitstream is any one of: an MPEG-1 file, an MPEG-2 file, an MPEG-4 file, an H.264 file, a 3GPP bitstream, a 3GPP-2 bitstream, an SD-Video bitstream, an HD-Video bitstream, a DVD multimedia bitstream, a VCD multimedia bitstream, an HD-DVD multimedia bitstream, a DTV/HDTV multimedia bitstream, a WAV bitstream, a DV bitstream, a QuickTime bitstream, a CDA bitstream, an MP3 bitstream, an MP2 bitstream, a WMA bitstream, a WMV bitstream, an ASF bitstream, or an AVI file.

9. The method of one of claims 1 to 8, further including :
detecting if the multimedia bitstream contains embedded multimedia processing information.

10. The method of claim 9, further including:
identifying the embedded multimedia processing information in the multimedia bitstream; and
determining if additional multimedia processing information is necessary to process the multimedia bitstream, and wherein upon detecting additional multimedia processing information is necessary to process the multimedia bitstream, analyzing the multimedia bitstream to determine the additional multimedia processing information.

11. The method of claim 10, wherein upon determining the additional multimedia processing information, embedding the additional multimedia processing information into the multimedia bitstream.

12. The method of claim 9, further including:
identifying the embedded multimedia processing information in the multimedia bitstream; and
determining if additional multimedia processing information is necessary to process the multimedia bitstream;
wherein upon detecting that additional multimedia processing information is not necessary to process the multimedia bitstream, extracting the embedded multimedia processing information.

13. The method of claim 12, further including:
processing the multimedia content using the extracted multimedia processing information.

14. The method of claim 9, and wherein upon detecting that multimedia processing information is not embedded within the multimedia bitstream, analyzing the multimedia bitstream to determine multimedia processing information useful for processing the multimedia content;
wherein the step of embedding the multimedia processing information includes embedding the multimedia processing information determined from analyzing the multimedia bitstream.

15. The method of claim 9, wherein upon detecting that the multimedia bitstream contains embedded multimedia processing information, extracting the multimedia processing information from the multimedia bitstream.

16. A system for processing digital multimedia comprising:
an executable module for embedding multimedia processing information within a multimedia bitstream, wherein the multimedia processing information is useful for processing multimedia content.

17. The system of claim 16, wherein the system further includes :
an analyzing module for determining the multimedia processing information useful for processing the multimedia content within the multimedia bitstream.

18. The system of claim 17, wherein the system further includes :
an executable module for extracting the multimedia processing information from the multimedia bitstream; and
a multimedia processing module configured to use the extracted multimedia processing information for processing the multimedia content.

19. The system of claim 18, further including :
a demultiplexer for separating a data stream having the multimedia processing information from a hybrid multimedia bitstream.

20. The system of claim 18, further including :
a multiplexer for combining a data stream having the multimedia processing information with the multimedia bitstream to form a hybrid multimedia bitstream.
